**Europäisches Patentamt**

**European Patent Office**

**Office européen des brevets**

(19)

(11) Veröffentlichungsnummer : **0 029 569**
**B1**

(12) # EUROPÄISCHE PATENTSCHRIFT

(45) Veröffentlichungstag der Patentschrift :
**10.02.88**

(21) Anmeldenummer : **80107129.1**

(22) Anmeldetag : **17.11.80**

(51) Int. Cl.⁴ : **G 01 T 1/164**

(54) Verfahren und Gerät zur Korrektur der räumlichen Verzerrung einer Szintillationskamera.

(30) Priorität : **20.11.79 US 96182**

(43) Veröffentlichungstag der Anmeldung :
**03.06.81 Patentblatt 81/22**

(45) Bekanntmachung des Hinweises auf die Patenterteilung : **10.02.88 Patentblatt 88/06**

(84) Benannte Vertragsstaaten :
**DE FR GB NL**

(56) Entgegenhaltungen :
**EP-A- 0 002 540**
**EP-A- 0 021 366**
**US-A- 3 745 345**

(73) Patentinhaber : **Siemens Aktiengesellschaft Berlin und München**
**Wittelsbacherplatz 2**
**D-8000 München 2 (DE)**

(72) Erfinder : **Delmedico, Anthony P.**
**8306 N.Ozanam**
**Niles Illinois 60648 (US)**
Erfinder : **Arseneau, Roger E.**
**511 Ivy Lane**
**Arlington Heights Illinois 60004 (US)**

## Beschreibung

Die Erfindung bezieht sich auf ein Verfahren und ein Gerät zur Korrektur der räumlichen Verzerrung einer Szintillationskamera, die Bildereignis-Positionskoordinatensignale und Bildereignis-Energiesignale $Z_C$ erzeugt, wobei während einer off-line Eichphase Korrekturfaktoren in Antwort auf Bildereignisse mit einem vorgegebenen Referenz-Energieniveau $Z_{REF}$ ermittelt und abgespeichert werden und wobei in einer on-line Untersuchungsphase entsprechend den abgespeicherten Korrekturfaktoren korrigierte Bildereignis-Positionskoordinatensignale erzeugt werden.

Ein Verfahren und ein Gerät dieser Art sind z. B. durch die US-PS 37 45 345 vorbekannt.

Bei Szintillationskameras, z. B. solchen des « Anger-Typs », ist es wichtig, die ihnen innewohnende räumliche Verzerrung zu korrigieren, weil eine örtliche Verdichtung oder auch Expansion von Bilddaten der Bildereignisse vermieden werden muß. Eine örtliche Verdichtung oder Expansion der Bilddaten führt zu Schwankungen in der Bildintensität, die das Bild insgesamt verfälschen. Räumliche Verzerrungen sind das Ergebnis von systembedingten Fehlern in der Positionierung der Szintillationsereignisse, die sich aufgrund von Ungenauigkeiten und Nichtlinearitäten in den Ausgangsdaten über die Bildereignis-Positionskoordinaten des Anzeigegerätes ergeben. Die Charakteristik der räumlichen Verzerrung variiert in Abhängigkeit von der Position, in der ein Bildereignis auftritt, auf der Bildfläche der Kamera, so daß die Bildereignisse nicht an ihrem korrekten Ort im Gesamtbild abgebildet werden. Die räumliche Versetzung einzelner Ereignisse ist zwar im Bild nicht direkt visuell wahrnehmbar ; sie führt aber dennoch zu Ungleichförmigkeiten im Bildfeld, die dann als Intensitätsänderungen merklich sichtbar sind.

Weitere Verfahren zur Korrektur der räumlichen Verzerrung im Sinne einer Linearisierung sowie die zugehörigen Geräte wurden z. B. in der EP-A-00 21 366, veröffentlicht am 07.01.81, vorgeschlagen oder sie sind durch die folgenden Aufsätze bekannt :

« Removal Of Gamma Camera Non-Linearity And Non-Uniformities Through Real-Time Signal Processing » von G. F. Knoll et al., präsentiert im Juli 1979 in Paris auf der Konferenz für Nuklearmedizin,

« On-Line Digital Methods For Correction Of Spatial And Energy Dependent Distortion Of Anger Camera Images » von Shabason et al. aus « A Review Of Information Processing In Medical Imaging », Fifth International Conference, Seiten 376-388, Vanderbilt University, Nashville, Tenn. vom 27. Juni bis 1. Juli 1977,

« Quantitative Studies With The Gamma Camera ; Correction For Spatial And Energy Distortion » von Soussaline et al. aus « A Review Of Information Processing In Medical Imaging », Fifth International Conference, Seiten 360-375, Vanderbilt University, Nashville, Tenn. vom 27. Juni bis 1. Juli 1977.

Die in diesem Stand der Technik beschriebenen Verfahren und Geräte arbeiten zufriedenstellend, solange die Bildereignisse auch tatsächlich Energieniveaus haben, die mit denen übereinstimmen, für die in der off-line Phase die Korrekturfaktoren zur Korrektur der räumlichen Verzerrung errechnet wurden. Problematisch wird es jedoch, wenn die Energieniveaus der Bildereignisse unterschiedlich sind zu jenen, für die die Korrekturfaktoren errechnet wurden. In diesem Falle, wo also die Charakteristik der räumlichen Verzerrung sich in Abhängigkeit vom Energieniveau des jeweiligen Bildereignisses ändert, ist ein Einsatz der Verfahren und der Geräte des Standes der Technik kaum mehr möglich. Dies gilt einerseits für jenen Fall, bei dem die Szintillationskamera eine Energiequelle abbildet, die für sich unterschiedliche Energienivaus hat. Es gilt andererseits aber auch für den Fall, daß bei einer Abbildung mit der Szintillationskamera mehrere Energiequellen eingesetzt werden, die unter sich unterschiedliche Energienivaus haben. In beiden Fällen geht es um Energieniveaus, die Werte haben, die unterschiedlich sind zu jenen, für die die Korrekturfaktoren für die räumliche Verzerrung vorher errechnet wurden.

Es gibt im Zusammenhang mit Szintillationskameras auch noch weitere Korrekturverfahren und zugehörige Korrekturgeräte. Diese befassen sich aber alle mit der Korrektur von Ungleichförmigkeiten in der Energieverteilung bei Szintillationskameras. Die Ungleichförmigkeiten in der Energieverteilung stellen neben den Bildverfälschungen, die aufgrund der räumlichen Verzerrung auftreten, eine weitere Fehlerquelle für die Bildaufzeichnung dar. Ein Verfahren und ein Gerät zur Korrektur speziell der Ungleichförmigkeiten in der Energieverteilung sind bereits vorgeschlagen worden. Dem Vorschlag gemäß erfolgt die Korrektur anhand von Korrekturfaktoren, die in Form einer Matrix gespeichert sind und die während einer off-line Eichphase als Energieantwort der Szintillationskamera auf eine Feldflußquelle gemessen werden. Während der on-line Untersuchungsphase wird der jeweilige Korrekturfaktor, der mit einem Bildereignis-Positionskoordinatensignal korrespondiert, ausgelesen und in Übereinstimmung mit diesem schließlich das Bildereignis-Energiesignal für jedes Bildereignis direkt korrigiert. Die korrigierten Bildereignis-Energiesignale werden schließlich einem Energie-Analysator zugeleitet, der ein Energiefenster mit festgelegter Breite aufweist. Fällt ein korrigiertes Bildereignis-Energiesignal in die Grenzen des Fensters des Energie-Analysators, so wird es von diesem als gültiges Bildereignis akzeptiert und zur Aufzeichnung an das Bildaufzeichnungsgerät weitergeleitet. Liegt das Bildereignis-Energiesignal hingegen außerhalb der Grenzen des Energiefensters, so betrachtet der Energie-Analysator das Bildereignis für ungültig ; es wird von ihm abgelehnt und gelangt somit also nicht zur Anzeige.

Ein weiteres Verfahren sowie ein Gerät zur Korrektur der Ungleichförmigkeit der Energieverteilung ist aus dem Artikel « A New Method Of Correcting For Detector Non-Uniformity In Gamma Cameras » von Lapidus, Raytheon Medical Electronics, ST-3405, November 1977, bekannt.

Der Lapidus-Artikel beschreibt dabei ein Verfahren zum Modifizieren des Z (Energie)-Signals eines Bildereignisses dadurch, daß ein gespeicherter Korrekturfaktor (von einem 64 × 64 Datenfeld) entsprechend der Position des Bildereignisses ausgelesen wird. Der Korrekturfaktor verändert die Pulsbreite des Z-Signals unter Zuhilfenahme eines Pulsbreitenmodulators. Das Bildgerät benutzt dieses Z-Signal mit variabler Pulsbreite dazu, die Intensität des abgebildeten Bildpunktes auf einem Film zu variieren. Ein fließender Mode wird eingesetzt, um die Verteilung der Ungleichförmigkeit zu « erlernen ». Es wird so also ein Datenfeld von Werten erhalten und gespeichert, das die Antwort des Kameradetektors auf jede der insgesamt 4096 X, Y-Positionen repräsentiert.

Wie schon erläutert, beschäftigen sich die zuvor genannten Verfahren und Systeme aber nur mit der Korrektur der Ungleichförmigkeit der Energieverteilung. Sie bieten keine Lösung an, die es ermöglicht, jene Probleme zu bewältigen, die zuvor im Zusammenhang mit der Korrektur der räumlichen Verzerrung geschildert wurden.

Aufgabe vorliegender Erfindung ist es also, ein Verfahren und ein Gerät speziell für die Korrektur der räumlichen Verzerrung dahingehend weiterzubilden, daß eine noch exaktere Korrektur möglich ist, wobei es insbesondere auch ohne Bedeutung sein soll, wieviele einzelne Energiequellen mit untereinander unterschiedlichen Energieniveaus eine Kamera abbildet oder wieviele Energiniveaus eine einzelne Energiequelle beinhaltet.

Die Aufgabe wird mit einem Verfahren der eingangs genannten Art erfindungsgemäß dadurch gelöst, daß es folgende Schritte in der on-line Untersuchungsphase umfaßt :

a) es wird die Abhängigkeit der räumlichen Verzerrung der Szintillationskamera von verschiedenen, sich vom Referenz-Energieniveau $Z_{REF}$ der off-line Eichphase unterscheidenden Energieniveaus der Bildereignisse gemessen ;

b) aus der gemessenen Abhängigkeit der räumlichen Verzerrung wird ein räumliches Verzerrungsmuster gebildet, das den mit abnehmendem Energieniveau zunehmenden Verzerrungsgrad berücksichtigt ; und

c) in Abhängigkeit von dem gebildeten räumlichen Verzerrungsmuster wird danach die Korrektur der Bildereignis-Positionskoordinatsignale dahingehend modifiziert, daß bei jedem Bildereignis sich energienieveaukorrigierte Bildereignis-Positionskoordinatsignale ergeben, sofern das zugehörige Bildereignis-Energiesignal $Z_C$ im Vergleich zum Referenz-Energieniveau $Z_{REF}$ ein unterschiedliches Energieniveau hat.

Ein Gerät zur Durchführung dieses Verfahrens umfaßt eine Szintillationskamera, die Bildereignis-Positionskoordinatsignale und Bildereignis-Energiesignale $Z_C$ erzeugt und die eine Korrigiereinrichtung für die räumliche Verzerrung umfaßt, die zudem in Übereinstimmung mit gespeicherten Korrekturfaktoren für die räumliche Verzerrung korrigierte Bildereignis-Positionskoordinatsignale erzeugt, wobei die Korrekturfaktoren während einer off-line Eichphase in Antwort auf Bildereignisse, die ein vorgewähltes Referenz-Energieniveau $Z_{REF}$ haben, ermittelt und abgespeichert wurden. Dieses Gerät ist erfindungsgemäß dadurch gekennzeichnet, daß die Korrigiereinrichtung eine Signaländerungseinheit zum Messen der Abhängigkeit der räumlichen Verzerrung der Szintillationskamera von verschiedenen, sich vom Referenz-Energieniveau $Z_{REF}$ der off-line Eichphase unterscheidenden Energieniveaus der Bildereignisse und zur Bildung eines räumlichen Verzerrungsmusters aus der gemessenen Abhängigkeit der räumlichen Verzerrung umfaßt, das den mit abnehmendem Energieniveau zunehmenden räumlichen Verzerrungsgrad berücksichtigt, und daß die Signaländerungseinheit in Abhängigkeit vom gebildeten räumlichen Verzerrungsmuster die Korrektur der Bildereignis-Positionskoordinatsignale dahingehend modifiziert, daß bei jedem Bildereignis sich energienieveaukorrigierte Bildereignis-Positionskoordinaten-signale ergeben, sofern das zugehörige Bildereignis-Energiesignal $Z_C$ im Vergleich zum Referenz-Energieniveau $Z_{REF}$ ein unterschiedliches Energieniveau hat.

Die vorliegende Erfindung ermöglicht also eine dynamische Änderung der räumlichen Verzerrungskorrektur der Szintillationskamera unter Zuhilfenahme der Signaländerungseinheit der Korrigiereinrichtung. Die Korrigiereinrichtung beinhaltet dabei einen Speicher, in dem die Korrekturfaktoren für die räumliche Verzerrung in einem vorbestimmten adressierbaren Format gespeichert sind. Während der on-line Untersuchungsphase der Szintillationskamera wandelt die Korrigiereinrichtung die einzelnen Bildereignis-Positionskoordinatsignale in Übereinstimmung mit den gespeicherten Korrekturfaktoren in die korrigierten Bildereignis-Positionskoordinatsignale um. Eine Kombiniereinheit ermöglicht eine Änderung der bereits korrigierten Bildereignis-Positionskoordinatsignale in Übereinstimmung mit dem jeweiligen Energieniveau des Bildereignisses, so daß eine genaue Korrektur der räumlichen Verzerrung auch für das gerade vorhandene Energieniveau des Bildereignisses erhalten wird. Die Szintillationskamera ist auf diese Weise automatisch und dynamisch dazu fähig, räumliche Verzerrungseffekte bei Bildereignissen mit verschiedenen Energieniveaus zu korrigieren. Unterschiedliche Energieniveaus der Bildereignisse treten auf, wenn die Szintillationskamera die Strahlung einer Strahlungsquelle aufnimmt, die eine Vielzahl von unterschiedlichen Energieniveaus hat, oder wenn sie eine Mehrzahl von Energiequellen abbildet, von denen jede ein Energieniveau aufweist, das von jenem Energieniveau abweicht, für das die gespeicherten Korrekturfaktoren für die räumliche Verzerrung errechnet worden waren. Die Änderungseinheit ändert die Korrektur der räumlichen Verzerrung, ohne daß vorher bereits gespeicherte Korrekturfaktoren geändert werden müssen oder gar die Szintillationskamera selbst durch innere Modifikation geändert werden muß.

Weiterbildungen der Erfindung sind in den Ansprüchen 3 bis 13 enthalten. Weitere Vorteile und Einzelheiten der Erfindung ergeben sich aus der nachfolgenden Beschreibung eines Ausführungsbeispiels anhand der Zeichnung und in Verbindung mit den abhängigen Ansprüchen.

Es zeigen :

Figur 1 das Prinzipschaltbild einer Szintillationskamera mit einem Korrekturgerät gemäß der Erfindung,

Figur 2 die Erfindung in detaillierterer Darstellung als Ausschnitt aus dem Prinzipschaltbild der Figur 1,

Figuren 3, 4 Darstellungen der Diagramme von Korrekturfaktoren an vier benachbarten Matrixpunkten,

Figur 5 die Einheit zur Änderung der Korrektur einer Verzerrung gemäß den Figuren 1 und 2 in detaillierterer Darstellung,

Figur 6 eine Ausführungsform der Schaltung von Figur 2 in detaillierter Darstellung,

Figur 7 eine Darstellung der Energiekurve gegenüber dem Energieänderungssignal ZVR.

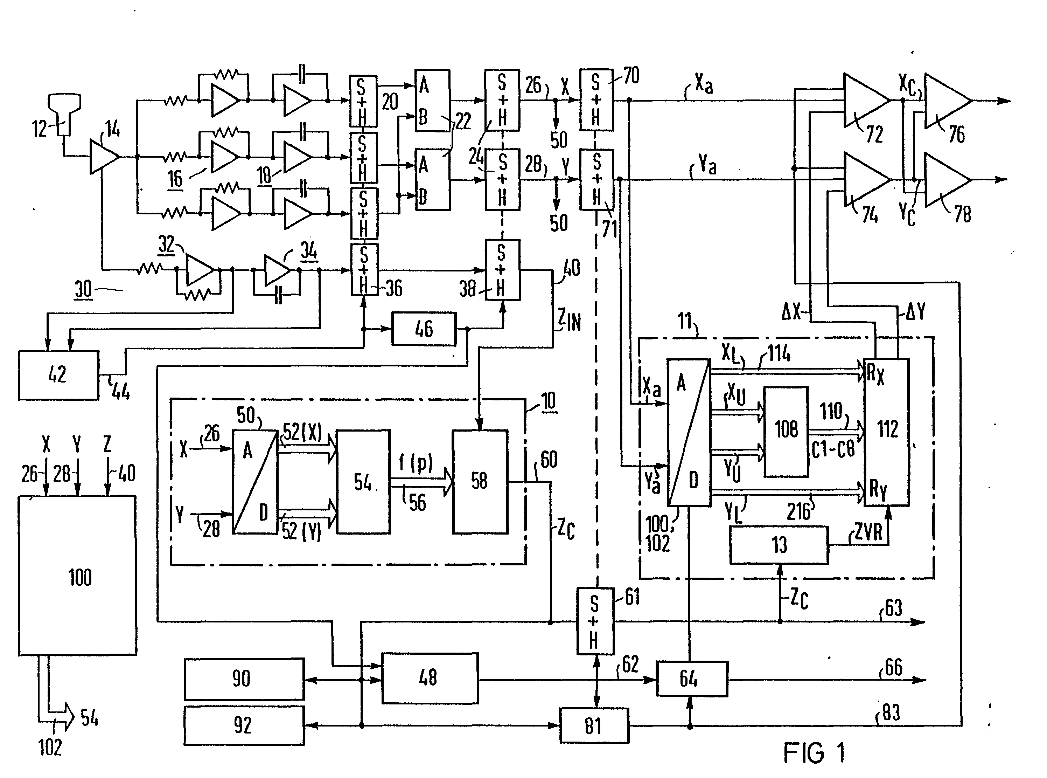

Ein on-line Korrigiergerät zur Korrektur der räumlichen Verzerrung, das dazu benutzt wird, die vorliegende erfindungsgemäße Methode zu praktizieren, hat in der Figur 1 die Bezugsziffer 11. Es ist dargestellt in Verbindung mit Teilen der Szintillationskamera. Die Szintillationskamera der Figur 1 ist von dem allgemeinen Typ, der Szintillationsereignisse in elektrische Signale umwandelt, die die Ortskoordinaten jedes der Szintillationsereignisse und deren Energie repräsentieren. Dieser Typ ist z. B. auch als « Anger-Typ » gut bekannt. Solche Szintillationskameras sind beispielsweise in den US-Patenten 30 11 057, 37 45 345 und 39 84 689 beschrieben, auf die zwecks Entnahme weiterer Information hinsichtlich Aufbau und Funktionsweise einer Szintillationskamera ausdrücklich Bezug genommen wird.

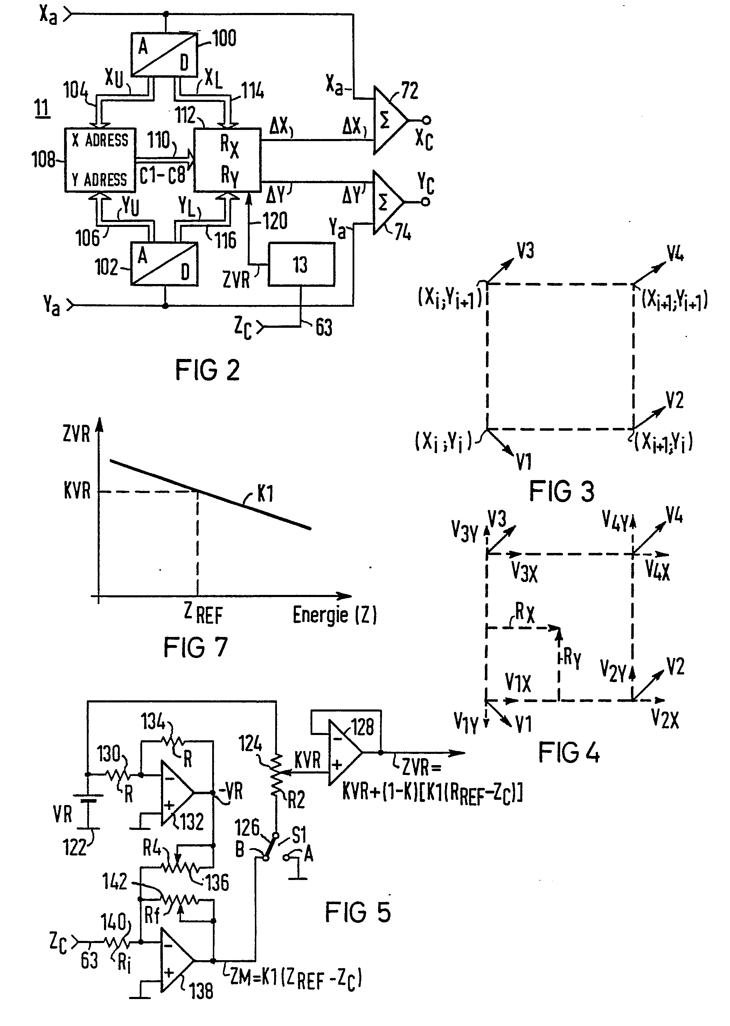

Szintillationsereignisse treten grundsätzlich immer dann auf, wenn z. B. Gammastrahlen auf einen Szintillationskristall an der Stirnfläche der Kamera auftreffen. Sie lassen sich mittels Fotovervielfacherröhren (eine davon ist in der Figur 1 z. B. mit der Kennziffer 12 angedeutet) erfassen, wozu diese in einem vorbestimmten Konfigurationsmuster hinter dem Szintillationskristall angeordnet sind, um so die Lichtenergie jedes Szintillationsereignisses in elektrische Pulse umformen zu können. Es gibt besondere Ausgestaltungen von Szintillationskameras, bei denen zwischen dem Kristall und den Fotovervielfacherröhren auch noch eine Anordnung eines Lichtleiters vorhanden ist. Normale Szintillationskameras arbeiten mit Gruppen von etwa 37 bis 75 Fotovervielfacherröhren, um so die Szintillationsereignisse quer über die Oberfläche des Szintillationskristalls erfassen zu können, so wie es beispielsweise in den Figuren 1 und 2 des vorher erwähnten US-Patentes 37 45 345 dargestellt ist.

In Übereinstimmung mit üblicher Detektorelektronik von Szintillationskameras sind die Pulsausgänge aller Fotovervielfacherröhren 12 innerhalb der Röhrenanordnung über Vorverstärker 14, Summier- und Subtrahierverstärker 16, Integrationsstufen 18, Abtast- und Haltestufen 20 und Multiplizierstufen 22 mit Abtast- und Haltestufen 24 verbunden, die, so wie es in der Figur 1 grundsätzlich dargestellt ist, an ihren Ausgängen 26, 28 die X- und Y-Positionskoordinaten eines jeden Szintillationsereignisses liefern. Das Ausgangssignal einer jeden Fotovervielfacherröhre in der Röhrenanordnung hängt ab von der Nähe der betroffenen Fotovervielfacherröhre zum Szintillationsereignis.

Die Ausgangssignale der Fotovervielfacherröhren 12 werden auch noch einem Energieanalysierkreis 30 für das Z-Signal zugeleitet. Der Kreis 30 umfaßt dabei eine Summierverstärkerstufe 32, eine Integrationsstufe 34 und zwei Abtast- und Haltestufen 36 und 38. Der Ausgang der Abtast- und Haltestufe 38 erzeugt bei 40 ein unkorrigiertes Z-Signal $Z_{IN}$, das die Energie eines jeden Bildereignisses, so wie es anfällt, repräsentiert. Der Kreis 30 für das Z-Signal umfaßt aber auch noch einen Verarbeitungskreis 42, der an den Ausgängen des Summierverstärkers 32 und des Integrators 34 liegt und der bei 44 ein Ausgangssignal für die Abtast- und Haltestufe 36 sowie für eine Entzerr- und Steuerstufe 46 erzeugt. Der Verarbeitungskreis 42 versorgt das Gerät mit der Funktion eines eingangsseitigen Grobanalysators, so wie er z. B. in der US-Patentschrift 39 84 689 nach Aufbau und Funktionsweise beschrieben ist. Der Ausgang der Entzerr- und Steuerstufe 46 geht einerseits auf die Abtast- und Haltestufe 38 und andererseits auf einen Energie-Analysator 48, der ein Energiefenster mit bestimmter Breite aufweist. Die X- und Y-Koordinatensignale bei 26 und 28 und das Z-Energiesignal $Z_{IN}$ bei 40 liegen als Eingangssignale am Energiekorrekturapparat 10.

Das on-line Energiekorrigiergerät 10 umfaßt einen Analog-Digital-Konverter 50, der mit den Ausgängen 26 und 28 für die X- und Y-Positionskoordinatensignale verbunden ist. Der Analog-Digital-Konverter 50 liefert an den Ausgängen 52 die X- und Y-Positionskoordinate für jedes Bildereignis als Digitalwert auf einer geeigneten Anzahl von digitalen Steuerleitungen. Die digitalen Ausgangswerte werden auf den Adressiereingang eines Energiekorrekturfaktor-Speichers 54 gegeben. Der Speicher 54 hat in sich ein Datenfeld von Energiekorrigierfaktoren gespeichert, die innerhalb des Datenfeldes so angeordnet sind, daß sie in Einklang mit Informationen über die Koordinaten von Bildfeldpositionen adressierbar sind, welche Informationen Flächenteile oder Bildträger des Bildfeldes der Kamera repräsentieren. Die Energiekorrekturfaktoren werden in einer off-line Eichphase bestimmt und im Energiekorrekturfaktor-Speicher 54 gespeichert zum Zwecke der Benutzung während der on-line Untersuchungsphase der Szintillationskamera und des zugeordneten Apparates.

Während der on-line Untersuchungsphase der Szintillationskamera ruft jedes aus einer Position X, Y anfallende Bildereignis über die zugehörigen digitalisierten X- und Y-Koordinatensignale im Energiekorrekturfaktor-Speicher 54 eine Adresse für eine Speicherzelle auf, in der ein Energiekorrekturfaktor gespeichert ist, der speziell dem Bildereignis aus der Position X, Y zu dessen Energiekorrektur zugeordnet ist. Der Energiekorrekturwert wird daraufhin vom Speicher ausgelesen. Der Energiekorrekturfaktor-Speicher 54 liefert demgemäß also in Antwort auf jedes Bildereignis ein Ausgangssignal bei 56 auf einer vorbestimmten Zahl von digitalen Steuerleitungen und in einem digitalen Format, das den Energiekorrekturfaktor so repräsentiert, daß er in geeigneter Weise dem Energiesignal bei 40, das ebenfalls vom Bildereignis stammt, in Übereinstimmung mit dem Bildpunkt, an dem das Ereignis in der Bildfläche aufgetreten ist, zur Durchführung der Korrektur zugeführt werden kann.

Der digitale Korrekturfaktor, der in Figur 1 mit f(p) bezeichnet ist, wird dazu vom Ausgang 56 des Energiekorrekturfaktor-Speichers 54 auf den Eingang einer Energiesignal-Korrektureinheit 58 des Energiekorrigiergerätes 10 gegeben. Gleichzeitig wird auch das Z-Signal $Z_{IN}$ von 40 als Eingangssignal der Korrektureinheit 58 zugeleitet. In Einklang mit dem digitalen Korrekturfaktor f(p) bei 56 und dem analogen Z-Signal $Z_{IN}$ bei 40 liefert daraufhin die Energiesignal-Korrektureinheit 58 an einem Ausgang 60 ein korrigiertes Energiesignal $Z_C$ in analoger Form. Das korrigierte Energiesignal $Z_C$ bei 60 wird dem Eingang des Energie-Analysators 48 zugeführt.

Der Energie-Analysator 48 vergleicht nun das Energieniveau des korrigierten Energiesignals $Z_C$ bei 60 für jedes Bildereignis mit einem vorgewählten Energiefenster, das durch untere und obere Energiegrenzen definiert ist. Als Ergebnis des Vergleiches erzeugt der Analysator 48 ein Akzeptiersignal am Ausgang 62, wenn das korrigierte Energiesignal $Z_C$ innerhalb der Grenzen des vorgewählten Energiefensters liegt. Dementsprechend liefert er aber am Ausgang 62 ein Ablehnsignal, wenn sich das Energiesignal außerhalb der Grenzen des Energiefensters befindet.

Der Ausgang 62 des Energie-Analysators 48 ist an einer Helltaststeuerstufe 64 angeschlossen, die das beigeordnete Bildanzeige- und Analysegerät über den Helltastausgang 66 steuert. Die Helltaststeuerstufe 64 bestimmt in Antwort auf angenommene oder abgelehnte Signale in der Leitung 62, ob ein Bildereignis angezeigt bzw. gegebenenfalls für analytische Zwecke gezählt werden soll oder nicht.

Die Positionskoordinaten des Ereignisses, das angezeigt werden soll, werden von den X, Y-Positionskoordinatensignalen bei 26, 28 abgeleitet. Durch sie wird schließlich die jeweils richtige Position des Bildereignisses in der Bildmatrix festgelegt, die durch das beigeordnete Bildanzeige- und Analysegerät produziert wird.

Im besonderen ist der Ausgang 26 für das X-Positionskoordinatensignal mit einer Abtast- und Haltestufe 70 verbunden. Diese erzeugt ein Signal $X_a$ für einen ersten Eingang eines X-Misch- und Spektrumtors 72. In ähnlicher Weise ist der Ausgang 28 für das Y-Positionskoordinatensignal mit einer Abtast- und Haltestufe 71 verbunden, die ein Signal $Y_a$ erzeugt, das dem ersten Eingang eines Y-Misch- und Spektrumtores 74 zugeführt wird. Die Ausgänge der Misch- und Spektrumtore 72 und 74 sind mit je einem von zwei Orientierungstoren 76 und 78 verbunden. Die Ausgänge der Tore 76 und 78 steuern direkt die Vertikal- und Horizontalablenkung, über die schließlich die darzustellende Position des Bildereignisses im Bild des Bildgerätes oder am Analysegerät festgelegt wird. Das X-Misch- und Spektrumtor 72 besitzt auch noch einen zweiten Eingang, der mit einem ersten Ausgang ΔX des Korrekturgerätes 11 zur Korrektur der räumlichen Verzerrung verbunden ist. In ähnlicher Weise liegt auch das Y-Misch- und Spektrumtor 74 mit einem zweiten Eingang an einem zweiten Ausgang ΔY des Korrekturgerätes 11. Ein dritter Eingang für jedes ber beiden Tore 72 und 74 ist darüber hinaus mit dem Ausgang 83 einer Steuerstufe 81 für eine Spektrumanzeige verbunden, die einerseits vom Ausgangssignal des Energie-Analysators 48 und andererseits vom korrigierten Energiesignal $Z_C$ kontrolliert wird.

Während der on-line Untersuchungsphase korrigiert also die Energiesignal-Korrektureinheit 58 das unkorrigierte Z-Energiesignal bei 40 in Übereinstimmung mit einem Korrekturfaktor f(p), um so die Ungleichförmigkeit der Energieantwort der Szintillationskamera als eine Funktion der Position des Bildereignisses auf der Kamerabildfläche zu minimieren. Die Energiesignal-Korrektureinheit 58 liefert daraufhin ein korrigiertes Energiesignal $Z_C$ bei 60 zum Energie-Analysator 48, der schließlich entscheidet, ob das Bildereignis zur Anzeige angenommen oder ob es abgelehnt wird.

Die Korrektur kann auch durchgeführt werden in Verbindung mit einer einzelnen Strahlungsquelle, die selbst eine Mehrzahl unterschiedlicher Energieniveaus aufweist. Ebensogut ist die Korrektur aber auch möglich, wenn die Bildereignisse von einer Mehrzahl von Quellen stammen, die untereinander unterschiedliche Energieniveaus der Strahlung haben. Die Art der Korrektur bleibt dieselbe ; es braucht lediglich zur Auswertung mehrerer Energieniveaus eine entsprechend höhere Zahl von Energie-Analysatoren mit entsprechend unterschiedlichen Energiefenstern vorgesehen zu werden. In der Figur 1 ist diese Möglichkeit durch Hinzufügung von zwei weiteren Energie-Analysatoren 90 und 92 angedeutet.

Wenden wir uns nun einer ausführlicheren Beschreibung des Korrekturgerätes 11 für die räumliche Verzerrung gemäß der vorliegenden Erfindung zu und beziehen wir uns nun zusätzlich noch auf die Figur 2, so beinhaltet das Korrekturgerät 11 einen Korrekturfaktor-Speicher 108, in dem Korrekturfaktoren zur Korrektur der räumlichen Verzerrung in Form eines vorbestimmten adressierbaren Datenfeldes gespeichert sind. Die Korrekturfaktoren dienen zur Korrektur der Verzerrung von Bildereignissen im Verlaufe der on-line Untersuchungsphase.

Die Korrekturfaktoren, die im Speicher 108 gespeichert sind, wurden in einer der on-line Untersuchungsphase vorausgegangenen off-line Eichphase bestimmt. In dieser off-line Eichphase wurde die räumliche Verzerrungscharakteristik der Szintillationskamera, bezogen auf ein besonderes Referenz- Energieniveau, exakt ermittelt. Der benutzte off-line Test-, Meß- und Analysierapparat ist im einzelnen nicht dargestellt. Er ist jedoch von einem Typ, wie er in der EP-A-00 21 366 geschildert und z. B als Datenspeichergerät 14 und Rechner 16 in der Figur 1 dieser Anmeldung dargestellt ist. Die einzelnen Korrekturfaktoren können aber selbstverständlich auch auf andere bekannte Weise ermittelt werden, z. B. nach einer der Methoden, wie sie im eingangs geschilderten Stand der Technik angewendet sind.

Zum Zwecke der Ermittlung der Korrekturfaktoren wird die Bildfläche der Szintillationskamera in eine Matrix aus 64 horizontalen und 64 vertikalen Linien unterteilt. Für die Eckpunkte jedes Flächenelements dieser Matrix wird dann der zugehörige Korrekturfaktor für die räumliche Verzerrung bestimmt.

In der Figur 3 sind die Korrekturfaktoren in Form von Vektoren dargestellt, die die Korrekturrichtung angeben. Diese Vektoren greifen jeweils an den Eckpunkten der einzelnen Bildflächenelemente der $64 \times 64$ Matrix an. Jeder Vektor an einem Kreuzpunkt der Matrix setzt sich dabei zusammen aus einer X-Korrekturkomponente und einer Y-Korrekturkomponente des diesem Kreuzpunkt zugeordneten Korrekturfaktors. Der Korrekturfaktor kann also im nachfolgenden als $\overline{\Delta}V(X, Y)$ bezeichnet werden.

In der Darstellung der Figur 3 zeigt jeder Vektor die Richtung der Korrektur an. Der jeweilige Vektor ist dabei jenem entgegengesetzt gerichtet, der in der off-line Eichphase als Maß für die räumliche Verzerrung gemessen worden war. Der jeweilige Vektor der Darstellung der Figur 3 definiert also einen Korrekturfaktor, der der gemessenen Verzerrung am jeweiligen Angriffspunkt entgegenwirkt. Der Korrekturvektor setzt also den zuvor aufgrund der räumlichen Verzerrung falsch positionierten Bildpunkt in die richtige Position.

So repräsentieren also die vier Korrekturfaktorvektoren V1, V2, V3, V4 der Figur 3 die Korrekturfaktoren in vier benachbarten Punkten $(X_i, Y_i)$, $(X_{i+1}, Y_i)$, $(X_i, Y_{i+1})$, $(X_{i+1}, Y_{i+1})$ des $64 \times 64$ Datenfeldes. In einer bevorzugten Ausführung und zum optimalen Gebrauch der Korrekturfaktoren $\overline{\Delta}V(X, Y)$ ist das Datenfeld im Speicher 108 des Korrekturgerätes 11 für die räumliche Verzerrung als eine Anzahl von Koeffizienten $C_1$ bis $C_8$ gespeichert, die Summen und Differenzen der aktuellen X- und Y-Korrekturfaktorkomponenten des Datenfeldes beinhalten, so wie sie vom off-line Test-, Meß- und Analysierapparat ermittelt wurden.

In besonderer Ausgestaltung setzt sich jeder Koeffizient $C_1$ bis $C_8$ aus acht Bits Information zusammen. Die Art, in der die Koeffizientenfaktoren $C_1$ bis $C_8$ errechnet werden und wie ihre Verbindung zu den X- und Y-Komponenten der originären Korrekturfaktorvektoren in der Matrix in Form der vier benachbarten Korrekturfaktoren jeder Einheitszelle des Datenfeldes an den entsprechenden vier benachbarten Datenfeldpunkten ist, ergibt sich wie folgt :

$$C_1 = V_{1X}$$

$$C_2 = V_{2X} - V_{1X}$$

$$C_3 = V_{3X} - V_{1X}$$

$$C_4 = V_{4X} - V_{3X} - V_{2X} + V_{1X}$$

$$C_5 = V_{1Y}$$

$$C_6 = V_{2Y} - V_{1Y}$$

$$C_7 = V_{3Y} - V_{1Y}$$

$$C_8 = V_{4Y} - V_{3Y} - V_{2Y} + V_{1Y}$$

Der Einfluß der Koeffizienten $C_1$ bis $C_8$ auf die Korrektur der räumlichen Verzerrung wird später noch detaillierter erläutert.

Wenden wir uns nun wieder der Figur 2 zu, so beinhaltet das Korrekturgerät 11 für die räumliche Verzerrung einen Analog-Digital-Konverter (ADC) 100 für die X-Koordinate und einen Analog-Digital-Konverter (ADC) 102 für die Y-Koordinate. Der ADC 100 wandelt dabei das seinem Analogeingang zugeführte $X_a$-Positionskoordinatensignal in zwei Datenströme $X_U$ und $X_L$. Entsprechend wandelt der ADC 102 das seinem Analogeingang zugeleitete Positionskoordinatensignal $Y_a$ in zwei separate Datenströme $Y_U$ und $Y_L$. Die Indizes U der Datenströme $X_U$ und $Y_U$ kennzeichnen die anfallenden Daten in der Rangfolge als « höchstwertige Daten ». Die Indizes L von $X_L$ und $Y_L$ kennzeichnen hingegen solche Daten, die in der Rangfolge als « niedrigstwertige Daten » eingestuft werden.

In der Figur 2 werden die höchstwertigen Daten $X_U$, $Y_U$ über Datenleitungen 104 bzw. 106 den X- und Y-Adressiereingängen des Korrekturfaktoren-Speichers 108 zugeleitet. Der Korrekturfaktoren-Speicher 108 liefert daraufhin die Koeffizienten $C_1$ bis $C_8$ in digitaler Form auf einer Datenleitung 110. Die Datenleitung 110 ist mit dem digitalen Dateneingang eines Korrektur-Interpolators 112 verbunden. Dieser Korrektur-Interpolator 112 umfaßt auch noch zwei weitere Dateneingänge mit Datenleitungen 114 und 116. Über die Datenleitung 114 werden dem Interpolator die niedrigstwertigen Daten $X_L$ zugeleitet. Entsprechend werden dem Interpolator über die Leitung 116 die niedrigstwertigen Daten $Y_L$ zugeführt.

6

0 029 569

Diese niedrigstwertigen Daten $X_L$ und $Y_L$ auf den Datenleitungen 114 und 116 definieren die Residualfunktionen $R_X$ und $R_Y$, wie sie in der Figur 4 dargestellt sind.

Die Signaländerungseinheit 13 zur Änderung der Korrektur der räumlichen Verzerrung erzeugt nun ein Energieänderungssignal ZVR für den Korrektur-Interpolator 112. Damit werden die gespeicherten Koeffizienten $C_1$ bis $C_8$ der Korrekturfaktoren in Übereinstimmung mit dem Niveau des Energiesignals $Z_C$ modifiziert. Das Energiesignal $Z_C$ gelangt auf der Ausgangsleitung 63 der Abtast- und Haltestufe 61 zur Signaländerungseinheit 13 des Korrigiergerätes 11.

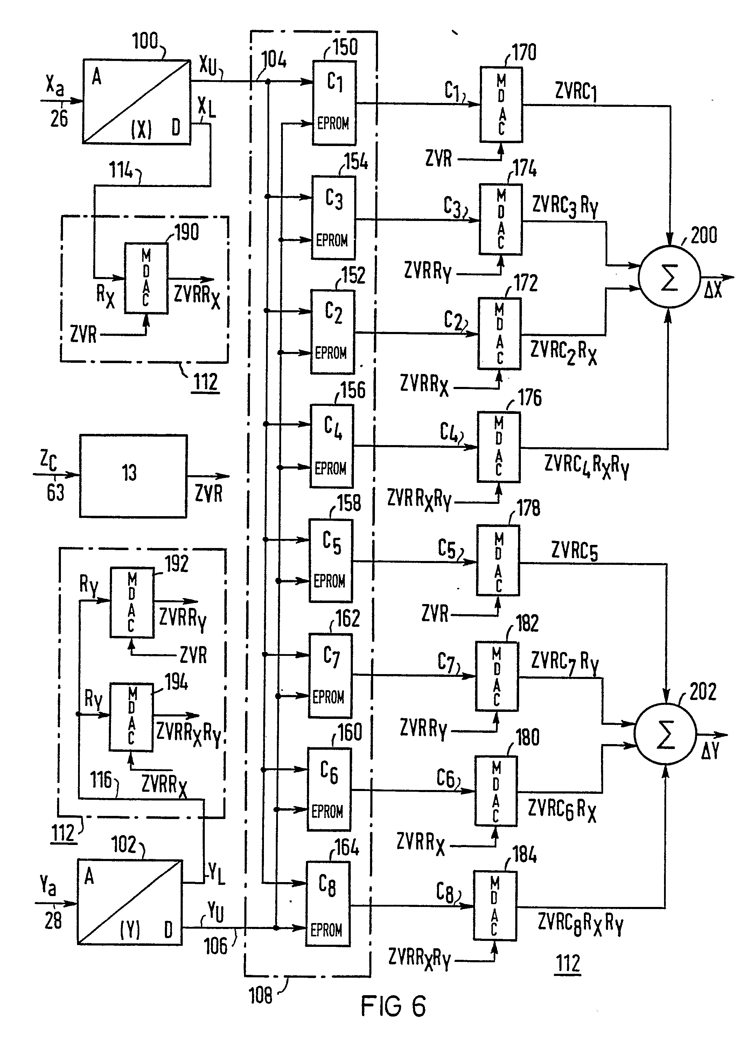

Die Arbeitsweise der Einheit 13 zur Änderung der Korrektur der räumlichen Verzerrung wird später noch näher in Verbindung mit der Figur 5 beschrieben. Die spezielle Arbeitsweise des Korrektur-Interpolators 112 wird hingegen später in Verbindung mit der Figur 6 diskutiert.

Es wird aber jetzt schon darauf hingewiesen, daß der Korrektur-Interpolator 112 so ausgelegt ist, daß er die nachfolgend aufgezeichneten Interpolationsoperationen durchführt und die Resultate ΔX, ΔY in eine analoge Signalform überführt :

$$\Delta X = [C_1 + C_2 R_X + C_3 R_Y + C_4 R_X R_Y] \cdot ZVR$$

$$\Delta Y = [C_5 + C_6 R_X + C_7 R_Y + C_8 R_X R_Y] \cdot ZVR$$

$R_X$ und $R_Y$ stellen dabei die Koordinaten des Bildereignisses innerhalb einer Zelle des Datenfeldes dar. Die Korrekturfaktoren ΔX und ΔY, die gemäß vorstehenden Operationen erhalten werden, werden als entsprechend ΔX- und ΔY-Analogsignale auf die Tore 72 und 74 gegeben.

Damit werden die $X_a$-, $Y_a$-Positionskoordinatensignale eines jeden Bildereignisses, so wie sie von der Szintillationskamera geliefert werden, durch die Faktoren ΔX und ΔY korrigiert. Man erhält so energieniveau-korrigierte Positionskoordinatensignale $X_C$, $Y_C$. Diese sind in bezug auf die räumliche Verzerrung korrigiert, und zwar in Übereinstimmung mit den Koeffizienten $C_1$ bis $C_8$ des Speichers 108 in Abhängigkeit von der Änderung der gespeicherten Koeffizienten. Eine solche Änderung wird vom Signal ZVR bei einem Bildereignis dann durchgeführt, wenn zwischen dem Energieniveau des Bildereignisses und jenem Energieniveau, auf dessen Basis die Korrekturfaktoren in der off-line Eichphase berechnet worden waren, eine Differenz auftritt. Die Änderung erfolgt in direkter Abhängigkeit von der Differenz zwischen dem Energieniveau des Bildereignisses und dem zuletzt genannten Energieniveau.

In welcher Weise läßt sich nun die Korrektur durchführen ? Hierzu ist vorab folgendes zu bemerken :

Im allgemeinen ist bei Szintillationskameras die räumliche Verzerrung größer für Bildereignisse mit niedrigeren Energieniveaus als für solche mit höheren Energieniveaus. Dies läßt sich durch Einsatz von zwei unterschiedlichen radioaktiven Quellen, wie z. B. Americium 241, das ein Energieniveau von 80 keV hat, und Barium 133, das ein Energieniveau von 360 keV hat, leicht demonstrieren. Vergleicht man die unkorrigierten Bilder beider Quellen, so zeigen sich im Bild von Americium 241 erhöhte Intensitäten oder sogenannte « heiße Punkte » im Röhrenzentrum der Fotovervielfacherröhren, während das Bild von Barium 133 an diesen Stellen niedrigere Intensitäten oder sogenannte « kalte Punkte » aufweist. Americium 241 bewirkt also im Vergleich mit Barium 133 die größere räumliche Verzerrung. Der Betrag der Verzerrung ändert sich also umgekehrt zur Höhe des Energieniveaus des Bildereignisses. Dieser Effekt hat seine Ursache vermutlich darin, daß mit zunehmender Eindringtiefe eine größere Lichtstreuung auftritt, die aufgrund der höheren Energie von Gammapartikeln verursacht wird. Klinische Untersuchungen haben jedenfalls bewiesen, daß für einen sehr breiten Bereich der Quellenenergie eine invers-lineare Beziehung zwischen dem Energieniveau der Quelle und der räumlichen Verzerrung existiert.

Demgemäß ist es ein wesentliches Merkmal der Signaländerungseinheit 13, daß sie einen Korrekturfaktor in umgekehrt proportionaler Weise zum Energieniveau des Bildereignisses korrigiert, wenn eine solche Korrektur nötig ist. Wie schon vorher erwähnt, ist diese Korrektur immer dann nötig, wenn das Energieniveau des jeweiligen Bildereignisses unterschiedlich ist zu jenem Referenz-Energieniveau $Z_{REF}$, für das die Korrekturfaktoren in der off-line Eichphase errechnet worden waren.

In bevorzugter Ausgestaltung verwendet also die Signaländerungseinheit 13, so wie sie z. B. in der Figur 5 dargestellt ist, zur Veränderung von Korrekturfaktoren eine Beziehung zwischen dem Änderungssignal ZVR und der Energie des Energiesignales $Z_C$ in dem Sinne, daß bei linear abnehmenden $Z_C$ das Änderungssignal ZVR linear zunimmt (linear gegenläufige Beziehung). Selbstverständlich können aber auch andere funktionale Beziehungen zwischen ZVR und $Z_C$ eingesetzt werden, sofern dies nötig sein sollte. Es ist auch selbstverständlich, daß eine Änderung des Korrekturfaktors von Bildereignis zu Bildereignis erfolgt, wenn eine solche Korrektur notwendig ist. Die Änderungseinheit 13 erzeugt also für jedes Bildereignis ein speziell diesem zugeordnetes Änderungssignal ZVR in Antwort auf das Energieniveau, das speziell dieses Ereignis hat. Damit werden jedoch die während der off-line Phase gemessenen und gespeicherten Korrekturfaktoren von Bildereignis zu Bildereignis automatisch und dynamisch an geänderte Bedingungen angepaßt. Die Korrektur der räumlichen Verzerrung wird damit ebenfalls automatisch und dynamisch immer in der richtigen Weise durchgeführt. Die Szintillationskamera bildet damit jede Art Energiequelle, von der die Bildereignisse herrühren, immer automatisch ohne Verzerrungen ab. Diese Quelle kann eine einzige Quelle sein, die eine Mehrzahl unterschiedlicher Energieniveaus aufweist ; die Kamera kann aber auch eine Mehrzahl von Quellen abbilden, die unterschiedliche Energieniveaus haben.

7

Die linear gegenläufige Beziehung zwischen dem Bildereignis-Energiesignal $Z_C$ und dem Energie-änderungssignal ZVR der Änderungseinheit 13 in der Ausbildung nach der Figur 5 ist im Diagramm der Figur 7 dargestellt. In diesem Diagramm ist auf der Abszisse das Referenzenergieniveau $Z_{REF}$ eingezeichnet, zu dem während der off-line Eichphase die Korrekturfaktoren gemessen worden waren. Das Referenz-Energieniveau beträgt beispielsweise 122 keV. Der zu diesem Energie-Referenzniveau $Z_{REF}$ passende Faktor ZVR ist auf der Ordinate mit ZVR = KVR dargestellt $(Z_{REF} = Z_C)$.

Gemäß der Figur 5 umfaßt nun die Signaländerungseinheit 13 zur Änderung der Korrektur der räumlichen Verzerrung eine Spannungsquelle mit der Bezugsspannung VR, die einerseits an Erdbezugs-spotential 122 und andererseits am einen Ende eines Potentiometers 124 liegt, das den Widerstandswert R2 hat. Das andere Ende des Potentiometers 124 führt zu einem Schalter 126 (S1), der zwischen zwei Schaltstellungen A und B umschaltbar ist. In der Schaltposition A verbindet der Schalter das zweite Ende des Potentiometers 124 mit Erdbezugspotential 122.

Das Potentiometer 124 entwickelt am Potentiometerabgriff ein Teilspannung, die in der Stellung A des Schalters S1 so eingestellt wird, daß sie den Wert KVR einnimmt. Wie vorher schon geschildert, entspricht dieser Wert ZVR = KVR dem Wert des Änderungssignals für das Energie-Referenzniveau von z. B. 122 keV. Die Teilspannung KVR wird dem nicht invertierenden Eingang einer Verstärkerstufe 128 zugeleitet, die ausgangsseitig das Änderungssignal ZVR erzeugt. Der Ausgang des Verstärkers 128 ist auf den invertierenden Eingang rückgekoppelt.

Die Bezugsspannung VR liegt über einen ohmschen Widerstand 130 mit dem Widerstandswert R aber auch noch am invertierenden Eingang eines Verstärkers 132. Der nicht invertierende Eingang des Verstärkers 132 liegt an Erdbezugspotential. Der Ausgang des Verstärkers 132 ist über einen ohmschen Widerstand 134, der ebenfalls einen Widerstandswert von R aufweist, auf den invertierenden Eingang rückgekoppelt. In der beschriebenen Beschaltung arbeitet der Verstärker 132 also als invertierender Verstärker mit der Verstärkung Eins. Der Verstärker liefert demnach ausgangsseitig die Spannung-VR. Diese Ausgangsspannung wird über einen einstellbaren Widerstand 136 mit dem Widerstandswert R4 auf den invertierenden Eingang eines Verstärkers 138 gekoppelt.

Am invertierenden Eingang des Verstärkers 138 liegt über einen ohmschen Widerstand 140, der den Widerstandswert $R_i$ hat, auch noch das Bildereignis-Energiesignal $Z_C$ von 63. Der nicht invertierende Eingang des Verstärkers 138 hat wieder Erdbezugspotential 122. Zwischen den Ausgang des Verstärkers 138 und den invertierenden Eingang ist ein einstellbarer Rückkoppelwiderstand 142 mit dem Widerstandswert $R_f$ geschaltet.

Das Ausgangssignal des Verstärkers 138 repräsentiert die Funktion ZM = K1 $(Z_{REF} — Z_C)$, wobei der einstellbare Widerstand 136 auf einen solchen Wert R4 eingestellt ist, daß VR/R4 = $Z_{REF}/R_i$. Die Größe K1 ist der Verstärkungsfaktor des Verstärkers 138, der durch $|K1| = R_f/R_i$ festgelegt ist.

Mit einer solchen Einstellung der Widerstände liefert also der Verstärker 138 ein Signal von ZM = 0 Volt, wenn $Z_C = Z_{REF}$, also z. B. $Z_C = 122$ keV, ist. Die Einstellungen, so wie sie diskutiert wurden, werden alle mit dem Schalter S1 in der Position A durchgeführt.

Der Ausgang des Verstärkers 138 führt zum Schaltkontakt B des Schalters 126. In dieser Schaltposition B des Schalters 126 kann der Widerstandswert $R_f$ des Widerstandes 142 so eingestellt werden, daß sich in Übereinstimmung mit der durch Messung und Analyse erhaltenen Beziehung zwischen $Z_C$ und ZVR der erforderliche Verstärkungsfaktor K1 entsprechend Figur 7 ergibt. Mit dieser Einstellung des Widerstandes 142 ergibt sich dann das Änderungssignal ZVR am Ausgang der Verstärkerstufe 128 wie folgt :

$$ZVR = KVR + (1 — K) [K1(Z_{REF} — Z_C)]$$

Diese Beziehung für ZVR bildet dann die Grundlage für eine Änderung der Korrektur der räumlichen Verzerrung in Abhängigkeit vom Energieniveau $Z_C$ des jeweiligen Bildereignisses. Das Ergebnis sind die korrigierten Signale $\Delta X$ und $\Delta Y$.

Bezieht man sich nun auf die Figur 6, so enthält der Korrekturfaktoren-Speicher 108 insgesamt acht elektronisch programmierbare Festwertspeicher 150 bis 164, die im Sprachgebrauch als EPROM bezeichnet werden und in denen die Koeffizienten $C_1$ bis $C_8$ der Korrekturfaktoren gespeichert sind. Die Aufteilung unter den einzelnen EPROM's ist so, daß die vier EPROM's 150, 152, 154, 156 die X-Korrekturfaktoren $C_1$, $C_2$, $C_3$ und $C_4$ liefern, während die EPROM's 158, 160, 162 und 164 für die Ausgabe der Y-Korrekturfaktoren $C_5$ bis $C_8$ zuständig sind. Sämtliche EPROM's 150 bis 164 werden von den höchstwertigen Datenbits der Informationen $X_U$ und $Y_U$ auf den Leitungen 104 und 106 adressiert. Die EPROM's 150 bis 164 können bis zu 4000 Datenwörter speichern, wobei jedes Datenwort insgesamt acht Bits an Information umfaßt. Die 64 × 64 Matrix des Datenfeldes hat zwar insgesamt 4096 Bildflächenelemente ; wie eingangs schon erwähnt, ist jedoch die Bildfläche der Kamera kreisfömig. Aus diesem Grunde liegt immer eine gewisse Zahl von Bildflächenelementen der quadratischen 64 × 64 Matrix ausserhalb des Kreises der Kamerabildfläche, so daß zur Speicherung der tatsächlich nötigen Informationen ein 4 K-Speicher (Speicherinhalt 4 Kilobit) ausreicht.

Jedem EPROM 150 bis 164 ist nun ausgangsseitig ein 8 Bit Multiplizier-Digital-Analog-Konverter 170 bis 184 im Interpolator 112 zugeordnet, der im nachfolgenden kurz MDAC genannt wird. Die Verbindung eines jeden EPROM's mit dem ihm zugeordneten MDAC ist so, daß der am Ausgang eines EPROM's

0 029 569

anfallende Korrekturfaktor $C_1$ bis $C_8$ auf den Digitaleingang des MDAC gegeben wird. Den Multipliziereingängen werden hingegen die in der Figur 6 dargestellten Interpolationsinformationen ZVR für den MDAC 170, $ZVRR_Y$ für den MDAC 174, $ZVRR_X$ für den MDAC 172, $ZVRR_XR_Y$ für den MDAC 176, ZVR für den MDAC 178, $ZVRR_Y$ für den MDAC 182, $ZVRR_X$ für den MDAC 180 und $ZVRR_XR_Y$ für den MDAC 184 zugeleitet.

Die Änderungsinformation ZVR wird, wie vorstehend schon erläutert, von der Signaländerungseinheit 13 geliefert. Die Änderungsinformation $ZVRR_X$ stammt hingegen von einem MDAC 190 des Interpolators 112, auf dessen Digitaleingang über die Leitung 114 die niedrigstwertigen Bits der Information $X_L$ gegeben werden. Wie schon erwähnt, werden diese Eingangsdaten mit $R_X$ bezeichnet. Dem Multipliziereingang wird hingegen die Information ZVR von der Änderungseinheit 13 zugeleitet. Die restlichen Informationen $ZVRR_Y$ und $ZVRR_XR_Y$ werden entsprechend durch zwei weitere MDAC's 192 und 194 des Interpolators 112 geliefert. Beide MDAC's werden am Digitaleingang über die Leitung 116 mit den niedrigstwertigen Informationen des Signals $Y_L$ in Form von $R_Y$ gespeist. Am Multipliziereingang des MDAC's 192 liegt wieder das Signal ZVR. Am Multipliziereingang des MDAC's 194 liegt hingegen das Ausgangssignal $ZVRR_X$ des MDAC 190.

Aufgrund der multiplizierenden Wirkung der MDAC's 170 bis 184 ergeben sich an deren Ausgängen die in Figur 6 dargestellten Korrekturanteile. Nach Aufsummierung in Summierstufen 200 und 202 ergeben sich die Signale $\Delta X$ und $\Delta Y$ in Einklang mit den oben dargestellten Interpolationsoperationen.

**Patentansprüche**

1. Verfahren zur Korrektur der räumlichen Verzerrung einer Szintillationskamera, die Bildereignis-Positionskoordinatensignale (X, Y) und Bildereignis-Energiesignale $Z_C$ erzeugt, wobei während einer off-line Eichphase Korrekturfaktoren in Antwort auf Bildereignisse mit einem vorgegebenen Referenz-Energieniveau $Z_{REF}$ ermittelt und abgespeichert werden und wobei in einer on-line Untersuchungsphase entsprechend den abgespeicherten Korrekturfaktoren korrigierte Bildereignis-Positionskoordinatensignale erzeugt werden, dadurch gekennzeichnet, daß es folgende Schritte in der on-line Untersuchungsphase umfaßt :

a) es wird die Abhängigkeit der räumlichen Verzerrung der Szintillationskamera von verschiedenen, sich vom Referenz-Energieniveau $Z_{REF}$ der off-line Eichphase unterscheidenden Energieniveaus der Bildereignisse gemessen ;

b) aus der gemessenen Abhängigkeit der räumlichen Verzerrung wird ein räumliches Verzerrungsmuster gebildet, das den mit abnehmendem Energieniveau zunehmenden räumlichen Verzerrungsgrad berücksichtigt ; und

c) in Abhängigkeit von dem gebildeten räumlichen Verzerrungsmuster wird danach die Korrektur der Bildereignis-Positionskoordinatensignale dahingehend modifiziert, daß bei jedem Bildereignis sich energieniveaukorrigierte Bildereignis-Positionskoordinatensignale $(X_C, Y_C)$ ergeben, sofern das zugehörige Bildereignis-Energiesignal $Z_C$ im Vergleich zum Referenz-Energieniveau $Z_{REF}$ ein unterschiedliches Energieniveau hat.

2. Gerät zur Durchführung des Verfahrens nach Anspruch 1, mit einer Szintillationskamera, die Bildereignis-Positionskoordinatensignale (X, Y) und Bildereignis-Energiesignale $Z_C$ erzeugt und die eine Korrigiereinrichtung (11) für die räumliche Verzerrung umfaßt, die zudem in Übereinstimmung mit gespeicherten Korrekturfaktoren für die räumliche Verzerrung korrigierte Bildereignis-Positionskoordinatensignale erzeugt, wobei die Korrekturfaktoren während einer off-line Eichphase in Antwort auf Bildereignisse, die ein vorgewähltes Referenz-Energieniveau $Z_{REF}$ haben, ermittelt und abgespeichert wurden, dadurch gekennzeichnet, daß die Korrigiereinrichtung (11) eine Signaländerungseinheit (13) zum Messen der Abhängigkeit der räumlichen Verzerrung der Szintillationskamera von verschiedenen, sich vom Referenz-Energieniveau $Z_{REF}$ der off-line Eichphase unterscheidenden Energieniveaus der Bildereignisse und zur Bildung eines räumlichen Verzerrungsmusters aus der gemessenen Abhängigkeit der räumlichen Verzerrung umfaßt, das den mit abnehmendem Energieniveau zunehmenden räumlichen Verzerrungsgrad berücksichtigt, und daß die Signaländerungseinheit (13) in Abhängigkeit vom gebildeten räumlichen Verzerrungsmuster die Korrektur der Bildereignis-Positionskoordinatensignale dahingehend modifiziert, daß bei jedem Bildereignis sich energieniveaukorrigierte Bildereignis-Positionskoordinaten- signale $(X_C, Y_C)$ ergeben, sofern das zugehörige Bildereignis-Energiesignal $Z_C$ im Vergleich zum Referenz-Energieniveau $Z_{REF}$ ein unterschiedliches Energieniveau hat.

3. Gerät nach Anspruch 2, dadurch gekennzeichnet, daß die Signaländerungseinheit (13) in Abhängigkeit vom gebildeten räumlichen Verzerrungsmuster ein energieabhängiges Änderungssignal ZVR nach der Beziehung

$$ZVR = KVR + (1 - K) \ [K1 \cdot (Z_{REF} - Z_C)]$$

erzeugt, wobei K ein Anteilfaktor und VR eine Bezugsspannung und KVR das gewünschte Ausgangssignal der Signaländerungseinheit (13) ist, wenn ein Energieniveau in der off-line Eichphase den Wert des Referenz-Energieniveaus $Z_{REF}$ hat, und wobei K1 ein Verstärkungsfaktor ist.

9

4. Gerät nach Anspruch 3, dadurch gekennzeichnet, daß die Signaländerungseinheit (13) zur Erzeugung des energieabhängigen Änderungssignals ZVR drei Verstärker (128, 132, 138) umfaßt, von denen der erste Verstärker (128) als Ausgangsverstärker eingangsseitig von einem Teil K einer Bezugsspannung VR gespeist wird, wobei dieser Teil K mittels eines Potentiometers (124) so eingestellt ist, daß sich für ein Bildereignis-Energiesignal $Z_C$ mit dem Wert des Referenz-Energieniveaus $Z_{REF}$ am ersten Verstärker (128) das gewünschte Ausgangssignal mit dem Wert ZVR = KVR ergibt.

5. Gerät nach Anspruch 4, dadurch gekennzeichnet, daß der zweite Verstärker (132) von der Bezugsspannung VR gespeist ist, daß der zweite Verstärker (132) ausgangsseitig mit dem Eingang des dritten Verstärkers (138) verbunden ist und daß dem Eingang des dritten Verstärkers (138) zusätzlich das Bildereignis-Energiesignal $Z_C$ zugeführt ist.

6. Gerät nach Anspruch 5, dadurch gekennzeichnet, daß in der Verbindung zwischen dem Ausgang des zweiten Verstärkers (132) und dem Eingang des dritten Verstärkers (138) ein einstellbarer Widerstand (136) vorhanden ist.

7. Gerät nach Anspruch 6, dadurch gekennzeichnet, daß der dritte Verstärker (138) in einem Rückkoppelkreis zwischen seinem Verstärkerausgang und seinem Verstärkereingang einen einstellbaren Widerstand (142) aufweist, dessen Widerstandswert $R_f$ zusammen mit dem Widerstandswert $R_i$ des Verstärker-Eingangswiderstandes (140) den Verstärkungsfaktor dieses dritten Verstärkers (138) nach der Beziehung $|K1| = R_f/R_i$ festlegt.

8. Gerät nach Anspruch 7, dadurch gekennzeichnet, daß der dritte Verstärker (138) ein Ausgangssignal ZM nach der Beziehung $ZM = K1 \cdot (Z_{REF} - Z_C)$ liefert.

9. Gerät nach Anspruch 8, dadurch gekennzeichnet, daß in der on-line Untersuchungsphase das Ausgangssignal ZM des dritten Verstärkers (138) dem Eingangssignal KVR des ersten Verstärkers (128) mittels des Potentiometers (124) überlagert ist.

10. Gerät nach einem der Ansprüche 3 bis 9, dadurch gekennzeichnet, daß das energieabhängige Änderungssignal ZVR der Signaländerungseinheit (13) zusammen mit den Korrekturfaktoren einem Korrektur-Interpolator (112) zugeleitet ist, der geänderte Korrekturfaktoren ($\Delta X$, $\Delta Y$) liefert.

11. Gerät nach Anspruch 10, dadurch gekennzeichnet, daß dem Korrektur-Interpolator (112) außer einem Korrekturfaktoren-Speicher (108) für die Speicherung der Korrekturfaktoren auch eine Analog-Digital-Konverter-Schaltung (100, 102) zugeordnet ist, die einen ersten Analogeingang für das unkorrigierte Bildereignis-Positionskoordinatensignal ($X_a$) bezüglich einer X-Richtung und einen zweiten Analogeingang für das unkorrigierte Bildereignis-Positionskoordinatensignal ($Y_a$) bezüglich einer Y-Richtung umfaßt, daß die Konverter-Schaltung (100, 102) aus den beiden unkorrigierten Bildereignis-Positionskoordinatensignalen ($X_a$, $Y_a$) insgesamt vier, aus digitalen Daten bestehende Ausgangsdatenflüsse ($X_L$, $Y_L$, $X_U$, $Y_U$) erzeugt, wobei ein erster Ausgangsdatenfluß ($X_U$), der die höchstwertigen Datenbits der X-Richtungskomponente der unkorrigierten Bildereignis-Positionskoordinatensignale ($X_a$, $Y_a$) beinhaltet, und ein zweiter Ausgangsdatenfluß ($Y_U$), der die höchstwertigen Datenbits der Y-Richtungskomponente der unkorrigierten Bildereignis-Positionskoordinatensignale ($X_a$, $Y_a$) beinhaltet, direkt auf die Adresseneingänge des Korrekturfaktoren-Speichers (108) geführt sind und wobei ein dritter Ausgangsdatenfluß ($X_L$), der die niedrigstwertigen Datenbits der X-Richtungskomponente beinhaltet, und ein vierter Ausgangsdatenfluß ($Y_L$), der die niedrigstwertigen Datenbits der Y-Richtungskomponente beinhaltet, als Korrekturanteile ($R_X$, $R_Y$) direkt auf den Korrektur-Interpolator (112) geführt sind.

12. Gerät nach Anspruch 11, dadurch gekennzeichnet, daß der Korrektur-Interpolator (112) so ausgelegt ist, daß er die nachfolgenden Interpolationsoperationen durchführt und korrigierte Korrekturfaktoren $\Delta X$ und $\Delta Y$ in Analogform entsprechend den folgenden Beziehungen abgibt :

$$\Delta X = [C_1 + C_2 R_X + C_3 R_Y + C_4 R_X R_Y] \cdot ZVR$$
$$\Delta Y = [C_5 + C_6 R_X + C_7 R_Y + C_8 R_X R_Y] \cdot ZVR$$

wobei $C_1$ bis $C_8$ vorgegebene Korrekturfaktoren sind, die jeweils einer Einheitszelle einer aus einer Anzahl von Einheitszellen aufgebauten Matrix zugeordnet sind, wobei für jeden Eckpunkt der Einheitszelle Verzerrungskorrekturvektoren (V1, V2, V3, V4) mit X-Komponente ($V_{1X}$, $V_{2X}$, $V_{3X}$, $V_{4X}$) und Y-Komponente ($V_{1Y}$, $V_{2Y}$, $V_{3Y}$, $V_{4Y}$) im Korrekturfaktoren-Speicher (108) gespeichert sind, wobei ZVR das energieabhängige Änderungssignal ist, und wobei $R_X$ und $R_Y$ die Koordinaten des betreffenden Bildereignisses innerhalb der Einheitszelle darstellen.

13. Gerät nach Anspruch 12, dadurch gekennzeichnet, daß im Korrektur-Interpolator (112) multiplizierende Digital-Analog-Konverter (170 bis 184 ; 190 bis 194) und Summierstufen (200, 202) vorgesehen sind, die die korrigierten Korrekturfaktoren $\Delta X$, $\Delta Y$ nach den angegebenen Interpolationsoperationen durch Multiplikation bzw. Addition der Korrekturfaktoren $C_1$ bis $C_8$ und Koordinaten $R_X$, $R_Y$ zusammensetzen.

## Claims

1. A method of correcting the spatial distortion of a scintillation camera which produces image element position coordinate signals (X, Y) and image element energy signals ($Z_C$), where correction factors are determined and stored during an off-line calibration phase in response to image elements which have a predetermined reference energy level $Z_{REF}$, and during an on-line investigation phase there are produced image element position coordinate signals corrected in accordance with the stored correction factors, characterised in that the on-line investigation phase comprises the following steps :

a) measurement of the dependency of the spatial distortion of the scintillation camera upon various energy levels of the image elements, which differ from the reference image element energy level $Z_{REF}$ of the off-line calibration phase ;

b) formation of a spatial distorsion pattern from the measured dependency of spatial distortion, taking into account the spatial degree of distortion which increases with a reducing energy level ; and

c) the modified correction of the image element position coordinate signals in dependence upon the formed, spatial distortion pattern, in that for each image element energy-level-corrected image element position coordinate signals $(X_C, Y_C)$ occur if the associated image element energy signal $(Z_C)$ has a different energy level to the reference energy level $Z_{REF}$.

2. A device for carrying out the method claimed in Claim 1, comprising a scintillation camera which produces image element position coordinate signals $(X, Y)$ and image element energy signals $Z_C$ and includes a correction device (11) for the spatial distortion, which additionally produces image element position coordinate signals corrected in accordance with stored correction factors for the spatial distortion, where during an off-line calibration phase the correction factors are determined and stored in response to image elements which have a pre-selected reference energy level $Z_{REF}$, characterised in that the correcting device (11) comprises a signal change unit (13) which measures the dependency of the spatial distortion of the scintillation camera upon various energy levels of the image elements, which differ from the reference energy level $Z_{REF}$ of the off-line calibration phase and which forms a spatial distortion pattern from the measured dependency of the spatial distortion which takes into account the degree of spatial distortion, which increases with a decreasing energy level, and that in dependence upon the formed spatial distortion pattern the signal change unit (13) modifies the correction of the image element position coordinate signals to the extent that for each image element energy-level-corrected image element position coordinate signals $(X_C, Y_C)$ occur if the associated image element energy signal $Z_C$ has a different level to the reference energy level $Z_{REF}$.

3. A device as claimed in Claim 2, characterised in that in dependence upon the formed spatial distortion pattern the signal change unit (13) produces an energy-dependent change signal ZVR in accordance with the equation :

$$ZVR = KVR + (1 - K) [K1 \cdot (Z_{REF} - Z_C)]$$

where K is a constituent factor, VR is a reference voltage and KVR is the desired output signal of the signal change unit (13) when an energy level in the off-line calibration phase has the value of the reference energy level $Z_{REF}$, and where K1 is an amplification factor.

4. A device as claimed in Claim 3, characterised in that for the generation of the energy-dependent change signal ZVR the signal change unit (13) comprises three amplifiers (128, 132, 138), of which the first amplifier (128) serves as an output amplifier and has its input supplied with a part K of a reference voltage VR, where this part K is adjusted by means of a potentiometer (124) such that for an image element energy signal $Z_C$ with the value of the reference energy level $Z_{REF}$ the desired output signal with the value ZVR = KVR occurs at the first amplifier (128).

5. A device as claimed in Claim 4, characterised in that the second amplifier (132) is supplied by the reference voltage VR, that the second amplifier (132) has its output connected to the input of the third amplifier (138) and that the input of the third amplifier (138) is additionally supplied with the image element energy signal $Z_C$.

6. A device as claimed in Claim 5, characterised in that an adjustable resistor (136) is arranged in the link between the output of the second amplifier (132) and the input of the third amplifier (138).

7. A device as claimed in Claim 6, characterised in that the third amplifier (138) has a feedback arm between its ouput and its input, comprising an adjustable resistor (142) whose resistance value $R_f$, together with the resistance value $R_i$ of the amplifier input resistor (140), determines the amplification factor of this third amplifier (138) in accordance with the equation $|K1| = R_f/R_i$.

8. A device as claimed in Claim 7, characterised in that the third amplifier (138) supplies an output signal ZM in accordance with the equation $ZM = K1 \cdot (Z_{REF} - Z_C)$.

9. A device as claimed in Claim 8, characterised in that in the on-line investigation phase, the output signal ZM of the third amplifier (138) is superimposed onto the input signal KVR of the first amplifier (128) by means of the potentiometer (124).

10. A device as claimed in one of Claims 3 to 9, characterised in that the energy-dependent change signal ZVR of the signal change unit (13), together with the correction factors, is supplied to a correction interpolator (112) which supplies modified correction factors $(\Delta X, \Delta Y)$.

11. A device as claimed in Claim 10, characterised in that the correction interpolator (112) is assigned not only a correction factor store (108) which stores the correction factors, but also an analogue/digital converter circuit (100, 102) which has a first analogue input for the uncorrected image element X-direction position coordinate signal $(X_a)$ and a second analogue input for the uncorrected image element Y-direction position coordinate signal (Ya), that from the two uncorrected image element position

coordinate signals $(X_a, Y_a)$ the converter circuit (100, 102) produces a total of four digital output date flows $(X_L, Y_L, X_U, Y_U)$, where a first output data flow $(X_U)$, which contains the highest-value data bits of the X-direction component of the uncorrected image element position coordinate signals $(X_a, Y_a)$, and a second output data flow $(Y_U)$, which contains the highest-value data bits of the Y-direction component of the uncorrected image element position coordinate signals $(X_a, Y_a)$, are fed directly to the address inputs of the correction factor store (108), and where a third output data flow $(X_L)$, which contains the lowest-value data bits of the X-direction component, and a fourth output data flow $(Y_L)$, which contains the lowest-value data bits of the Y-direction component, are directly fed, as correction constituents $(R_X, R_Y)$, to the correction interpolator (112).

12. A device as claimed in Claim 11, characterised in that the correction interpolator (112) is designed to be such that it carries out the following interpolation operations and emits corrected correction factors $\Delta X$ and $\Delta Y$ in analogue form in accordance with the following equations :

$$\Delta X = [C_1 + C_2 R_X + C_3 R_Y + C_4 R_X R_Y] \cdot ZVR$$
$$\Delta Y = [C_5 + C_6 R_X + C_7 R_Y + C_8 R_X R_Y] \cdot ZVR$$

where $C_1$ to $C_8$ are given correction factors, each of which is assigned to one unit cell of a matrix constructed from a number of unit cells, where for each corner point of the unit cell distortion correction vectors (V1, V2, V3, V4) comprises an X-component $(V_{1X}, V_{2X}, V_{3X}, V_{4X})$ and a Y-component $(V_{1Y}, V_{2Y}, V_{3Y}, V_{4Y})$ are stored in the correction factor store (108), where ZVR is the energy-dependent change signal and where $R_X$ and $R_Y$ represent the coordinates of the respective image element within the unit cell.

13. A device as claimed in Claim 12, characterised in that the correction interpolator (112) contains multiplying digital/analogue converters (170 to 184 ; 190 to 194) and adder stages (200, 202), which assemble the corrected correction factors $\Delta X$, $\Delta Y$ in accordance with the given interpolation operations by multiplication or, respectively, addition of the correction factors $C_1$ to $C_8$ and coordinates $R_X$, $R_Y$.

## Revendications

1. Procédé pour corriger la distorsion spatiale dans une caméra à scintillation, qui produit des signaux (X, Y) de coordonnées de position de phénomènes apparaissant dans l'image et de signaux $Z_C$ d'énergie des phénomènes apparaissant dans l'image, selon lequel, pendant une phase d'étalonnage off-line (autonome), on détermine et on mémorise des facteurs de correction en réponse aux phénomènes apparaissant dans l'image et possédant un niveau d'énergie de référence prédéterminé $Z_{REF}$, et selon lequel, lors d'une phase de recherche on-line (en ligne), on forme des signaux de coordonnées de position de phénomènes apparaissant dans l'image, corrigés conformément aux facteurs de correction mémorisés, caractérisé par le fait qu'il inclut les étapes opératoires suivantes lors de la phase de recherche on-line :

a) on mesure la dépendance de la distorsion spatiale de la caméra à scintillation vis-à-vis de différents niveaux d'énergie des phénomènes apparaissant dans l'image, qui diffèrent du niveau d'énergie de référence $Z_{REF}$ de la phase d'étalonnage off-line ;

b) à partir de la dépendance mesurée de la distorsion spatiale, on mesure un modèle de distorsion spatiale, qui prend en compte le degré de distorsion spatiale qui augmente lorsque le niveau d'énergie diminue ; et

c) en fonction du modèle formé de distorsion spatiale on modifie ensuite la correction des signaux de coordonnées de position de phénomènes apparaissant dans l'image de manière à obtenir, pour chaque phénomène apparaissant dans l'image, des signaux $(X_C, Y_C)$ de coordonnées de position du phénomène apparaissant dans l'image, dont le niveau d'énergie est corrigé, dans la mesure où le signal associé d'énergie $Z_C$ du phénomène apparaissant dans l'image possède un niveau d'énergie différent du niveau d'énergie de référence $Z_{REF}$.

2. Appareil pour la mise en œuvre du procédé selon la revendication 1, comportant une caméra à scintillation, qui produit des signaux (X, Y) de coordonnées de position de phénomènes apparaissant dans l'image et des signaux d'énergie $Z_C$ des phénomènes apparaissant dans l'image et comporte un dispositif (11) de correction de la distorsion spatiale, qui produit en outre, conformément à des facteurs de correction mémorisés pour la distorsion spatiale, des signaux corrigés de coordonnées de position de phénomènes apparaissant dans l'image, les facteurs de correction ayant été déterminés et mémorisés pendant une phase d'étalonnage off-line en réponse à des phénomènes apparaissant dans l'image, qui possèdent un niveau d'énergie de référence présélectionné $Z_{REF}$, caractérisé par le fait que le dispositif de correction (11) contient une unité (13) de modification des signaux, qui sert à mesurer la dépendance de la distorsion spatiale de la caméra à scintillation vis-à-vis de différents niveaux d'énergie, qui diffèrent du niveau d'énergie de référence $Z_{REF}$ de la phase d'étalonnage off-line, des phénomènes apparaissant dans l'image et à former, à partir de la dépendance mesurée de la distorsion spatiale, un modèle de distorsion spatiale qui prend en compte le degré de distorsion spatiale qui augmente lorsque le niveau d'énergie diminue, et que l'unité (13) de modification des signaux modifie la correction des signaux de coordonnées de position de phénomènes apparaissant dans l'image, en fonction du modèle formé de distorsion spatiale, de manière à obtenir, pour chaque phénomène apparaissant dans l'image, des signaux $(X_C, Y_C)$ de coordonnées de position du phénomène apparaissant dans l'image, dont le niveau d'énergie est corrigé, dans la mesure où le signal associé d'énergie $Z_C$ du phénomène apparaissant dans l'image possède un niveau d'énergie différent du niveau d'énergie de référence $Z_{REF}$.

3. Appareil suivant la revendication 2, caractérisé par le fait que l'unité (13) de modification des signaux produit, en fonction du modèle formé de distorsion spatiale, un signal de modification ZVR, qui dépend de l'énergie, conformément à la relation

$$ZVR = KVR + (1 - K) \ [K1 \cdot (Z_{REF} - Z_C)]$$

K étant un facteur indiquant une fraction, VR une tension de référence, KVR le signal de sortie désiré de l'unité (13) de modification des signaux lorsqu'un niveau d'énergie possède, pendant la phase d'étalonnage off-line, la valeur du niveau d'énergie de référence $Z_{REF}$, et K1 un facteur d'amplification.

4. Appareil selon la revendication 3, caractérisé en ce que l'unité (13) de modification des signaux, qui sert à produire le signal de modification ZVR, qui dépend de l'énergie, comporte trois amplificateurs (128, 132, 138), dont le premier (128), qui sert d'amplificateur de sortie, est alimenté, au niveau de son entrée, par une partie K d'une tension de référence VR, cette partie K étant réglée au moyen d'un potentiomètre (124) de manière à obtenir dans le premier amplificateur (128) le signal de sortie désiré possédant la valeur ZVR = KVR, pour un signal d'énergie $Z_C$ d'un phénomène apparaissant dans l'image et possédant la valeur du niveau d'énergie de référence $Z_{REF}$.

5. Appareil suivant la revendication 4, caractérisé par le fait que le second amplificateur (132) est alimenté par la tension de référence VR, que le second amplificateur (132) est relié, côté sortie, à l'entrée du troisième amplificateur (138) et qu'en outre le signal d'énergie $Z_C$ du phénomène apparaissant dans l'image est envoyé à l'entrée du troisième amplificateur (138).

6. Appareil suivant la revendication 5, caractérisé par le fait qu'une résistance réglable (136) est prévue dans la liaison entre la sortie du second amplificateur (132) et l'entrée du troisième amplificateur (138).

7. Appareil suivant la revendication 6, caractérisé par le fait que le troisième amplificateur (138) comporte, dans un circuit de réaction entre sa sortie et son entrée, une résistance réglable (142), dont la valeur résistive $R_f$ détermine, avec la valeur résistive $R_i$ de la résistance d'entrée (140) de l'amplificateur, le facteur d'amplification de ce troisième amplificateur (138), conformément à la relation $|K1| = R_f/R_i$.

8. Appareil suivant la revendication 7, caractérisé par le fait que le troisième amplificateur (138) délivre un signal de sortie ZM conforme à la relation

$$ZM = K1 \cdot (Z_{REF} - Z_C).$$

9. Appareil selon la revendication 8, caractérisé en ce que pendant la phase de recherche on-line, le signal de sortie ZM du troisième amplificateur (138) est superposé, au moyen du potentiomètre (124), au signal d'entrée KVR du premier amplificateur (128).

10. Appareil suivant l'une des revendications 3 à 9, caractérisé par le fait que le signal de modification ZVR, qui dépend de l'énergie, de l'unité (13) de modification des signaux est envoyé, ainsi que les facteurs de correction, à un dispositif (112) d'interpolation de correction, qui délivre des facteurs modifiés de correction (X, Y).

11. Appareil suivant la revendication 10, caractérisé par le fait qu'au dispositif (112) d'interpolation de correction se trouve également associé, en dehors d'une mémoire (108) de facteurs de correction, qui sert à mémoriser les facteurs de correction, un circuit (100, 102) formant convertisseur analogique/numérique, qui comporte une première entrée analogique pour le signal non corrigé $(X_a)$ de coordonnées de position d'un phénomène apparaissant dans l'image, en rapport avec une direction X, et une seconde entrée analogique pour le signal non corrigé $(Y_a)$ de coordonnées de position d'un phénomène apparaissant dans l'image, en rapport avec une direction Y, et que le circuit (100, 102) formant convertisseur produit, à partir des deux signaux $(X_a, Y_a)$ non corrigés de coordonnées de position du phénomène apparaissant dans l'image, un ensemble de quatre flux de données de sortie $(X_L, Y_L, X_U, Y_U)$ constitués par des données numériques, auquel cas le premier flux de données de sortie $(X_U)$, qui contient les bits de poids les plus élevés de données des composantes, suivant la direction X, des signaux non corrigés $(X_a, Y_a)$ de coordonnées de position du phénomène apparaissant dans l'image, et un second flux de données de sortie $(Y_i)$, qui contient les signaux non corrigés $(X_a, Y_a)$ de coordonnées de position du phénomène apparaissant dans l'image, sont envoyés directement aux entrées d'adresses de la mémoire (108) de facteurs de correction, et un troisième flux de données de sortie $(X_L)$, qui contient les bits de données, possédant les poids les plus faibles, de la composante suivant la direction X, un quatrième flux de données de sortie $(Y_L)$, qui contient les bits de données, possédant les poids les plus faibles, de la composante suivant la direction Y, sont envoyés directement, en tant que composantes de correction $(R_X, R_Y)$ au dispositif (112) d'interpolation de correction.

12. Appareil suivant la revendication 11, caractérisé par le fait que le dispositif (112) d'interpolation de correction est agencé de telle sorte qu'il exécute les opérations suivantes d'interpolation et délivre des facteurs de correction corrigés (ΔX et ΔY) sous forme analogique, conformément aux relations suivantes :

$$\Delta X = [C_1 + C_2\,R_X + C_3\,R_Y + C_4\,R_X\,R_Y] \cdot ZVR$$
$$\Delta Y = [C_5 + C_6\,R_X + C_7\,R_Y + C_8\,R_X\,R_Y] \cdot ZVR$$

dans lesquelles $C_1$ à $C_8$ sont des facteurs de correction prédéterminés, qui sont associés respectivement à une cellule unité d'une matrice constituée par un nombre de cellules unités, auquel cas pour chaque angle de la cellule unité, des vecteurs de correction de distorsions ($V_1$, $V_2$, $V_3$, $V_4$) possédant les composantes suivant X ($V_{1X}$, $V_{2X}$, $V_{3X}$, $V_{4X}$) et les composants suivant Y ($V_{1Y}$, $V_{2Y}$, $V_{3Y}$, $V_{4Y}$) sont mémorisées dans la mémoire (108) de facteurs de correction, ZVR est le signal de modification qui dépend de l'énergie et $R_X$ et $R_Y$ représentent les coordonnées du phénomène considéré apparaissant dans l'image à l'intérieur de la cellule unité.

13. Appareil suivant la revendication 12, caractérisé par le fait que dans le dispositif (112) d'interpolation de correction, il est prévu des convertisseurs numérique/analogique multiplicateur (170 à 184 ; 190 à 194) et des étages additionneurs (200, 202), qui rassemblent les facteurs de correction corrigés (ΔX, ΔY) conformément aux opérations indiquées d'interpolation, par multiplication ou addition des facteurs de correction ($C_1$ à $C_8$) et des coordonnées ($R_X$, $R_Y$).

FIG 1

0 029 569

FIG 2

FIG 3

FIG 7

FIG 4

FIG 5

$$ZVR = KVR + (1-K)[K1(R_{REF} - Z_C)]$$

$$ZM = K1(Z_{REF} - Z_C)$$

FIG 6